# EUROPEAN PATENT SPECIFICATION

(11) **EP 0 794 816 B1**
(45) Date of publication and mention of the grant of the patent: **06.03.2002**
(21) Application number: 95940483.1
(22) Date of filing: 01.12.1995
(51) Int. Cl.: A62C 3/07

(54) **METHOD AND APPARATUS FOR DETECTION AND PREVENTION OF FIRE HAZARD**
VERFAHREN UND VORRICHTUNG ZUR FESTSTELLUNG UND VERHINDERUNG VON BRANDGEFAHREN
PROCEDE ET APPAREIL POUR LA DETECTION ET LA PREVENTION DES DANGERS D'INCENDIE

(30) Priority: 02.12.1994 NO 944667
(43) Date of publication of application: 17.09.1997
(73) Proprietor: NORSK HYDRO A/S, 0240 Oslo 2 (NO)
(72) Inventor: OSTLYNGEN, Tom, Wilhelm, N-1182 Oslo (NO); THRONAES, Bjorn, N-0873 Oslo (NO)
(74) Representative: Busch, Thomas, Dipl.-Ing.
(86) International application number: PCT/NO95/00221
(87) International publication number: WO 96/16699

(56) References cited:
- EP-A- 0 675 013
- FR-A- 2 674 441
- US-A- 3 788 666
- US-A- 4 248 309
- US-A- 4 423 784

## Description

The present invention relates to an automatic detection of fire hazard and fire preventing/extinguishing system, particularly for vehicles provided with an internal combustion engine.

Automotive vehicles having engines of the above mentioned type involved in accidents and exposed to violent impact (crash) have a tendency to be set on fire during or right after the accidents. This is especially the case for injection engines where the feeding pump continues to provide fuel under pressure just representing a great hazard for the occupants of the vehicle. Use of portable extinguishing containers to extinguish a fire in the engine compartment is a risky and time demanding task involving exposure of persons to smoke and flames for persons opening the engine compartment (room) and furthermore allowing for inlet of air under the hub into the engine compartment, thus promoting a spread of the fire.

Consequently, various systems based on an automatic detection and extinguishing of fire have recently been developed and described in several patent applications/patents. Thus, FR 2674441 discloses a system based on use of HALON 13-01 as extinguishing agent being situated in a pressure vessel in the engine room (compartment) being activated by detectors of a frontal or lateral impact, or supplementary by detectors of smoke and/or flame. A system of pipelines and nozzles provides upon the above detection automatically discharge of HALON directly to the engine compartment and simultaneously provides for switch off of the fuel pump.

DE 4223293 A1 discloses a combined personal vehicle and truck (lorry) fire protection system based on detection of fire and use of CO₂ as fire extinguishing agent.

Disadvantages connected to installation/use of these and other known extinguishing systems are the necessity of displacing voluminous containers and auxiliary equipment (detectors, sensors, transducers) in the engine room lacking free space and, furthermore, increasing the weight and consequently the costs of the detection and extinguishing system.

Furthermore, RU 2008046 describes another fire extinguishing system based on discharge of radiator cooling fluid (water) or an ethylene glycol mixture for fire extinction assisted by pressurised propellant, e.g. CO₂ -gas. The claimed advantage of the disclosed subject matter is avoidance of special "bulky" containers of the extinguishing agents in vehicles. However, use of cooling water as extinguishing agent gives a poor extinguishing efficiency, limited capacity (leakages and losses due to direct through-streaming) and is definitely not applicable for fire preventing purposes.

US-A-4, 248, 309 discloses a fire extinguishing apparatus and a method of extinguishing a fire. To this end, the apparatus uses a cooling liquid applied in a cooling system of the vehicle engine.

EP-A-0 675 013, claiming priority of March 31, 1994, published on October 4, 1995, and designating Germany, France and the United Kingdom, describes a vehicle with an air conditioning system. The air conditioning system uses CO₂ as a refrigerant. A fire extinguishing system in the vehicle uses the CO₂ of the air conditioning system as an extinguishing agent. Nozzles located in the passenger compartment are activated as soon as a fire detector or a collision detector detects a fire or a collision, respectively.

Consequently, it is an object of the present invention to provide a new and improved automatic fire extinguishing system ensuring increased safety for the occupants of motor vehicles in case of accidents by preventively applied fire extinguishing agents

Another object of the present invention is to provide a new detection system reducing the number of applied components/parts and thus reducing the weight and costs of the installed detection and extinguishing system.

Still another object of the present invention is to provide a method and means for a differential (delayed) release of the extinguishing agent (fluid) being of environmentally acceptable (benign) type and preferentially already installed/applied for other purposes (functions) in the vehicle.

These and other objectives and features of the present invention are met by provision of a method and assembly (means) for detection of a fire hazard situation and preventing/extinguishing of fire as defined in the accompanying claims.

According to the invention a new fast responding system for detection/prevention/extinguishing of fire is developed based in a preferred embodiment of the system on application of CO₂ as extinguishing agent being already installed as a refrigerant in the air conditioning circuit of the vehicle and where the detection of fire is linked directly to the detection of front, side and/or rear impact and activation of the vehicle's airbag(s)' protection system.

The apparent advantage of using CO₂ as an agent preventing fire in connection with a vehicle being involved in an accident is a combination of the following characteristic features:
- cooling of the whole engine compartment below the ignition temperature,
- prolonged contact with cooling agent due to a partial formation of CO₂ adhering snow and following sublimation providing CO₂ in gas form,
- and finally an efficient reduction of the O₂ content in the closed/encapsulated rooms/compartments below the concentration required for burning (oxidation reaction).

The invention will be more readily understood and apparent from the following description of preferred embodiments and mode of operation of the system as illustrated in the attached drawings, Figs. 1-3, where
- Fig. 1: is a schematic side view of a vehicle accommodating components of the automatic fire hazard detection and fire preventing/extinguishing system,
- Fig. 2: illustrates schematically in a diagram form the system and its operably linked components applicable according to the present invention,
- Fig. 3: shows a cross-section of a test apparatus, used in extinguishing tests.

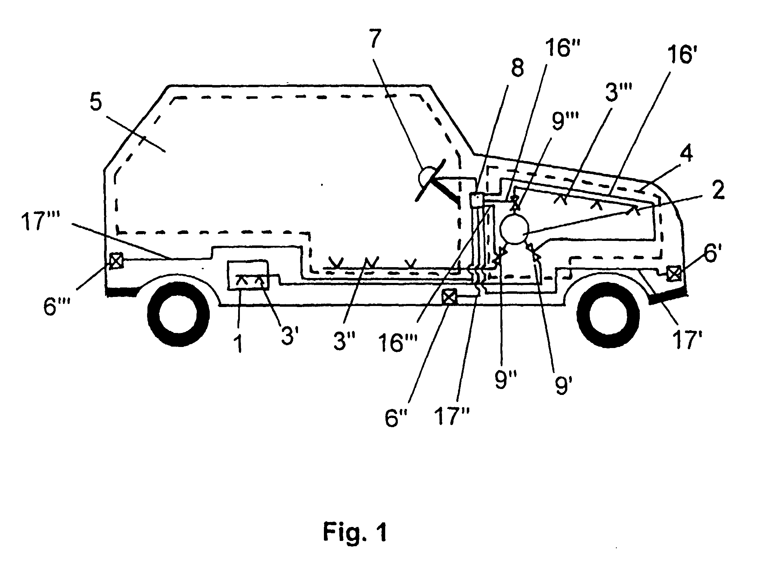

Referring to Fig. 1, showing schematically in a cross-sectional view an automotive vehicle comprising a conventionally situated frontal engine room 4 accommodating the vehicle engine (not shown in the Figure) and a rear situated fuel tank 1, number 2 depicts a container (vessel) containing by way of example liquid CO₂ as a fire extinguishing agent. Pressure (impact) sensors 6 situated strategically on sites and level(s) of expected impact as a front impact detector 6', side impact detector 6" and rear impact detector 6'", respectively are operably linked by transmission/signal lines 17', 17", 17"' to a processing/steering unit 8 providing steering signal through transmission lines 16', 16', 16"' to manipulate the valves 9', 9", 9"' opening/closing for the extinguishing agent access to a set of independently operable nozzles 3', 3", 3"' where the latter is situated in the engine room 4, and furthermore to the nozzles 3' ensuring release of the agent over the fuel tank 1 and also, preferentially delayed for a predetermined period of time allowing the passengers to leave the vehicle, also discharging of the agent into the passenger compartment 5 through nozzles 3". Said delayed release may be accomplished by a time delaying circuit in the processing/steering unit 8 that ensures the extinguishing agent to be discharged according to a pre-programmed pattern. This pre-programmed pattern may also include a control of the duration of the discharge of extinguishing agent at each location of the nozzles. Alternatively, time delaying elements and/or flow restrictors may be provided in the lines supplying extinguishing agent to the nozzles.

Advantageously the applied sensors/detectors 6 are identical with the sensors deployed/applied in connection with release/activation of the installed airbag(s) 7 for protection of the front seat occupants in the vehicle.

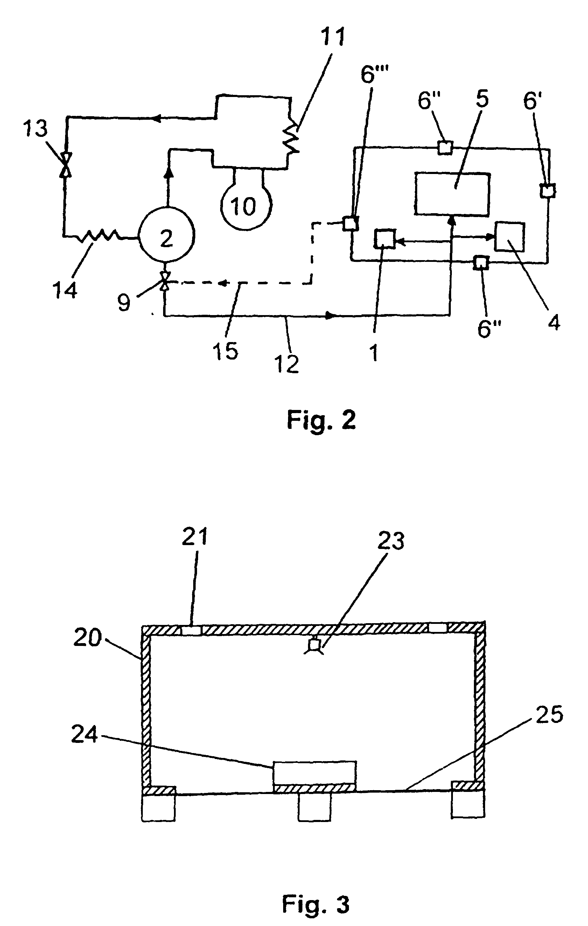

According to a preferred embodiment of the system the pressurised container 2 represents an integrated part of the air conditioning circuit using CO₂ as refrigerant. As shown in Fig. 2, illustrating schematically the connection between the present fire preventing/extinguishing system and the installed air conditioning assembly in block diagram form, the impact detectors 6 are connected through a transmission/signal line 15 to a valve 9 attached to the pressurised container 2 being an integral part as a buffer vessel (receiver) of a (transcritical) vapor compression cycle, further comprising a compressor 10, a gas cooler 11, a throttling valve 13 and an evaporator 14 connected in series into a closed circuit. The valve may advantageously be solenoid operated when electronic sensors are used, but the valve may also be operated by hydraulic or pneumatic means. Upon detection of an impact, the sensor(s) transmits a signal through transmission/signal line 15 to the valve 9 that will open for the pressurised CO₂ to flow via conduit 12 to the actual fire locations, as shown in this embodiment - fuel tank 1, engine room 4 and passenger compartment 5.

Thus, there is no need for neither additional impact sensors or a voluminous special container for the fire extinguishing agent. A simple adaptation of the buffer vessel (receiver) 2 by provision of an extra valve 9 and connecting line will eliminate installation of a new container for fire extinguishing purposes.

### Example

A fire extinguishing test was performed in a container provided with closed side walls 20, a partly open bottom section 25, and a top plate perforated with some small holes 21 as shown in the cross-sectional view according to Fig. 3.

The container was of a size similar to that of an engine room in an average personal car, i.e. height 0.5 metres, width 0.72 metres and length 1.12 metres. The inside volume of the container was about 400 litres.

A nozzle device 23 with three openings, each of a diameter of 1 millimetres, was centrally placed at the underside of the top plate. A vessel 24 with a diameter of 0.19 metres and height of 0.075 metres, was centrally placed in the bottom of the container.

Before the extinguishing tests were carried out it was observed that 0.2 litres of gasoline was able to bum for about ten minutes.

The extinguishing equipment comprised pressurised CO₂ ejected through the nozzle device. The capacity of the extinguishing equipment was about 60 grams of CO₂ per second.

It was carried out four extinguishing tests, where the extinguishing agent was ejected through the nozzles after the fire was allowed to burn for about one minute.

The time of extinguishing the fire was less than 5 seconds in all the tests that were carried out.

In each extinguishing test there was consumed less than 300 grams of CO₂.

Using pressurised CO₂ that is already installed in a car with an air-condition circuit applying CO₂ as refrigerant, there will customarily be about 2 kilos of CO₂ available for extinguishing purposes. Thus, it therefore should be ensured that there will be a sufficient amount of CO₂ available to extinguish a possible fire in the engine room in addition to possible fires at other locations in the car.

According to another inventive aspect of the present system the presence of an already installed CO₂-buffer container in the air condition circuit allows for possible in-situ provision of a more gentle fire extinguishing agent to be applied in the coupé. Thus, e.g. an additional vessel (not shown in the Figures) containing a mixture of nitrogen and argon gases may be installed in the passenger compartment and connected to the CO₂-container so that by co-ordinated "bleeding" of some CO₂ upon impact detection into this gas mixture a special agent known as INERGEN® or similar agents may be provided in-situ to avoid shock treatment (cooling) of the vehicle's occupants and even danger of suffocation by use of pure CO₂.

The scope of the present invention described and exemplified in the above way of preferred embodiments is not limited to these examples. The disclosed inventive principle of automatic detection of the fire hazard and the fire extinguishing system can also be applied, e.g. on battery powered vehicles, and a combination of automatic, semiautomatic or even manual means for activation/switch-off of the system is possible within the frame of the present invention as defined in the claims.

## Claims (Claims for the following Contracting State(s): AT, BE, CH, LI, DK, ES, GR, IE, IT, LU, MC, NL, PT, SE)

1. A method of automatic detection of a fire hazard and method of prevention or extinguishing of fire in automotive vehicles, particularly provided with combustion engines, the method comprising steps of automatic detection of impact imposed on vehicles involved in a collision by means of one or more impact detectors (6) and discharging extinguishing agent through nozzles (3), wherein a plurality of independently operable nozzles (3', 3", 3"') is distributed through different parts of the vehicle discharging cooling/fire extinguishing agent in a pre-programmed time pattern,
**characterized in that**
the extinguishing agent includes CO₂ already provided in the vehicle and applied as a refrigerant in the vehicle's air conditioning system (10, 11, 13, 14).

2. The method of claim 1, **characterized in that** the activation of a cooling/fire extinguishing nozzle (3''') located in the vehicle's engine room (4) is started simultaneously with activation of airbag(s) (7) protecting the occupants of the vehicle.

3. The method of claim 1 or 2, **characterized in that** an activation of fire extinguishing nozzles (3") located in the passenger compartment (5) is delayed for a predetermined period of time compared to the impact detection, so as to allow passengers to leave the vehicle.

4. The method of claims 1 to 3, **characterized in that** the fire extinguishing agent is of the INERGEN® type provided in-situ by adding of CO₂ from the vehicle's air conditioning system (10, 11, 13, 14) into a container containing a mixture of N₂ and argon prior to the release of the resulting gas mixture into the passenger compartment (5).

5. An apparatus for automatic detection of a fire hazard and elimination of fire in automotive vehicles, particularly provided with combustion engines, comprising:
One or more impact detectors (6);
a plurality of independently operable nozzles (3) distributed through different parts (1, 4, 5) of the vehicle and adapted to discharge a cooling/fire extinguishing agent; and
a processing/steering means (8, 9) for activating said nozzles (3) in a pre-programmed pattern,
**characterized in that**
the extinguishing agent includes CO₂ already provided in the vehicle and applied as a refrigerant in the vehicle's air conditioning system (10, 11, 13, 14).

6. The apparatus of claim 5, **characterized in that** the impact detector(s) (6) and the processing/steering unit (8) are parts of the impact detection and activating system for release of airbag(s) (7).

7. The apparatus of claim 5 or 6, **characterized by** an extinguishing agent container (2) containing CO₂ and an additional container containing a mixture of nitrogen and argon gases and connected to the extinguishing agent container (2), whereby in-situ provision of INERGEN® gas applicable for extinguishing a fire in the passenger compartment (5) is ensured.

## Claims (Claims for the following Contracting State(s): DE, FR, GB)

1. A method of automatic detection of a fire hazard and method of prevention or extinguishing of fire in automotive vehicles, particularly provided with combustion engines, the method comprising steps of automatic detection of impact imposed on vehicles involved in a collision by means of one or more impact detectors (6) and discharging extinguishing agent through nozzles (3), wherein
a plurality of independently operable nozzles (3', 3", 3'") is distributed through different parts (1, 4, 5) of the vehicle discharging a cooling/fire extinguishing agent in a pre-programmed time pattern, and wherein
an activation of fire extinguishing nozzles (3") located in the passenger compartment (5) is delayed for a predetermined period of time compared to an impact detection, so as to allow passengers to leave the vehicle.

2. The method of claim 1, **characterized in that** the activation of a cooling/fire extinguishing nozzle (3"') located in the vehicle's engine room (4) is started simultaneously with activation of airbag(s) (7) protecting the occupants of the vehicle.

3. The method of claim 1 or 2, **characterized in that** the extinguishing agent includes CO₂.

4. The method of claims 1, 2 or 3, **characterized in that** the extinguishing agent includes CO₂ already provided in the vehicle and applied as a refrigerant in the vehicle's air conditioning system (10, 11, 13, 14).

5. The method of claim 3 or 4, **characterized in that** the fire extinguishing agent is of the INERGEN® type provided in-situ by adding of CO₂ from the vehicle's air conditioning system (10, 11, 13, 14) into a container containing a mixture of N₂ and argon prior to release of the resulting gas mixture into the passenger compartment (5).

6. An apparatus for automatic detection of a fire hazard and elimination of fire in automotive vehicles, particularly provided with combustion engines, comprising:
One or more impact detectors (6);
a plurality of independently operable nozzles (3) distributed through different parts (1, 4, 5) of the vehicle and adapted to discharge a cooling/fire extinguishing agent; and
a processing/steering means (8, 9) for activating said nozzles (3) in a pre-programmed pattern,
wherein
the pattern includes that an activation of the nozzles (3") located in the passenger compartment (5) is delayed for a predetermined period of time compared to an impact detection, so as to allow passengers to leave the vehicle.

7. The apparatus of claim 6, **characterized in that** the impact detector(s) (6) and the processing/steering unit (8) are parts of the impact detection and activating system for release of airbag(s) (7).

8. The apparatus of claim 7, **characterized in that** the extinguishing agent is a refrigerant applied in the vehicle's air conditioning system (10, 11, 13, 14).

9. The apparatus of any of claims 6 to 8, **characterized in that** the extinguishing agent is CO₂.

10. The apparatus of any of claims 6 to 9, **characterized by** an extinguishing agent container (2) containing CO₂ and an additional container containing a mixture of nitrogen and argon gases and connected to the extinguishing agent container (2), whereby in-situ provision of INERGEN® gas applicable for extinguishing a fire in the passenger compartment (5) is ensured.

## Patentansprüche (Patentansprüche für folgende(n) Vertragsstaat(en): AT, BE, CH, LI, DK, ES, GR, IE, IT, LU, MC, NL, PT, SE)

1. Verfahren zum automatischen Erfassen einer Brandgefahr sowie Verfahren zum Verhindern oder Löschen eines Brandes in selbstfahrenden Fahrzeugen, insbesondere mit Verbrennungsmotoren, welches Verfahren Schritte des automatischen Erfassens eines Aufpralles, den an einer Kollision beteiligte Fahrzeuge erleiden, mittels eines oder mehrerer Aufprallerfassungseinrichtungen (6) und des Ausstoßens von Löschmittel durch Düsen (3) enthält, wobei eine Vielzahl von unabhängig betätigbaren Düsen (3', 3'', 3''') über verschiedene Teile des Fahrzeugs verteilt ist, welche ein Kühl-/Feuerlöschmittel in einem vorprogrammierten Zeitschema ausstoßen,
**dadurch gekennzeichnet, daß**
das Löschmittel CO₂ enthält, das bereits in dem Fahrzeug vorgesehen ist und als Kühlmittel in dem Klimatisierungssystem (10, 11, 13, 14) des Fahrzeugs angewendet wird.

2. Verfahren nach Anspruch 1, **dadurch gekennzeichnet, daß** die Aktivierung einer Kühl-/Feuerlöschdüse (3'''), die in dem Motorraum (4) des Fahrzeugs angeordnet ist, gleichzeitig mit der Aktivierung von einem oder mehreren Airbag(s) (7), die die Fahrzeuginsassen schützen, gestartet wird.

3. Verfahren nach Anspruch 1 oder 2, **dadurch gekennzeichnet, daß** eine Aktivierung von in dem Fahrgastraum (5) angeordneten Feuerlöschdüsen (3'') für eine vorbestimmte Zeitdauer in Bezug auf die Erfassung des Aufpralls verzögert wird, um so den Fahrzeuginsassen das Verlassen des Fahrzeugs zu ermöglichen.

4. Verfahren nach Anspruch 1, 2 oder 3, **dadurch gekennzeichnet, daß** das Feuerlöschmittel CO₂ enthält, das bereits in dem Fahrzeug vorgesehen ist und als Kühlmittel in dem Klimatisierungssystem (10, 11, 13, 14) des Fahrzeugs angewendet wird.

5. Verfahren nach Anspruch 3 oder 4, **dadurch gekennzeichnet, daß** das Feuerlöschmittel dem INERGEN® -Typ entspricht, welches durch Zugabe von CO₂ aus dem Klimatisierungssystem (10, 11, 13, 14) des Fahrzeugs in einen Behälter, der eine Mischung von N₂ und Argon enthält, vor dem Freisetzen der resultierenden Gasmischung in den Fahrgastraum (5) in situ bereitgestellt wird.

6. Vorrichtung zum automatischen Erfassen einer Brandgefahr sowie zum Löschen eines Brandes in selbstfahrenden Fahrzeugen, insbesondere mit Verbrennungsmotoren, enthaltend:
eine oder mehrere Aufprallerfassungseinrichtungen (6) ;
eine Vielzahl von unabhängig betätigbaren Düsen (3), die über verschiedene Teile (1, 4, 5) des Fahrzeugs verteilt sind und so ausgelegt sind, daß sie ein Kühl-/Feuerlöschmittel ausstoßen; und
eine Verarbeitungs-/Steuereinrichtung (8, 9) zum Aktivieren der Düsen (3) nach einem vorprogrammierten Schema,
wobei
das Schema enthält, daß eine Aktivierung von in dem Fahrgastraum (5) angeordneten Feuerlöschdüsen (3'') für eine vorbestimmte Zeitdauer in Bezug auf die Erfassung des Aufpralls verzögert wird, um so den Fahrzeuginsassen das Verlassen des Fahrzeugs zu ermöglichen.

7. Vorrichtung nach Anspruch 6, **dadurch gekennzeichnet, daß** der bzw. die Aufprallerfassungseinrichtung(en) (6) und die Verarbeitungs-/Steuerungseinheit (8) Teile des Aufprallerfassungs- und Aktivierungssystems für die Auslösung des bzw, der Airbag(s) (7) sind.

8. Vorrichtung nach Anspruch 7, **dadurch gekennzeichnet, daß** das Löschmittel ein Kühlmittel ist, das in dem Klimatisierungssystem (10, 11, 13, 14) des Fahrzeugs angewendet wird.

9. Vorrichtung nach einem der Ansprüche 6 bis 8, **dadurch gekennzeichnet, daß** das Löschmittel CO₂ ist.

10. Vorrichtung nach einem der Ansprüche 6 bis 9, **gekennzeichnet durch** einen Löschmittelbehälter (2), der CO₂ enthält, und einen zusätzlichen Behälter, der eine Mischung aus Stickstoff- und Argongas enthält und mit dem Löschmittelbehälter (2) verbunden ist, wodurch sichergestellt ist, daß INERGEN® Gas, das zum Löschen eines Brandes im Fahrgastraum (5) anwendbar ist, in situ zur Verfügung steht.

## Patentansprüche (Patentansprüche für folgende(n) Vertragsstaat(en): DE, FR, GB)

1. Verfahren zum automatischen Erfassen einer Brandgefahr sowie Verfahren zum Verhindern oder Löschen eines Brandes in selbstfahrenden Fahrzeugen, insbesondere mit Verbrennungsmotoren, welches Verfahren Schritte des automatischen Erfassens eines Aufpralles, den an einer Kollision beteiligte Fahrzeuge erleiden, mittels eines oder mehrerer Aufprallerfassungseinrichtungen (6) und des Ausstoßens von Löschmittel durch Düsen (3) enthält, wobei
eine Vielzahl von unabhängig betätigbaren Düsen (3', 3'', 3''') über verschiedene Teile (1, 4, 5) des Fahrzeugs verteilt ist, welche ein Kühl-/Feuerlöschmittel in einem vorprogrammierten Zeitschema ausstoßen, und wobei
eine Aktivierung von in dem Fahrgastraum (5) angeordneten Feuerlöschdüsen (3'') für eine vorbestimmte Zeitdauer in Bezug auf die Erfassung des Aufpralles verzögert wird, um so den Fahrzeuginsassen das Verlassen des Fahrzeugs zu ermöglichen.

2. Verfahren nach Anspruch 1, **dadurch gekennzeichnet, daß** die Aktivierung einer Kühl-/Feuerlöschdüse (3'''), die in dem Motorraum (4) des Fahrzeugs angeordnet ist, gleichzeitig mit der Aktivierung von einem oder mehreren Airbag(s) (7), die die Fahrzeuginsassen schützen, gestartet wird.

3. Verfahren nach Anspruch 1 oder 2, **dadurch gekennzeichnet, daß** das Löschmittel CO₂ enthält.

4. Verfahren nach Anspruch 1 bis 3, **dadurch gekennzeichnet, daß** das Feuerlöschmittel dem INERGEN® -Typ entspricht, welches durch Zugabe von CO₂ aus dem Klimatisierungssystem (10, 11, 13, 14) des Fahrzeugs in einen Behälter, der eine Mischung von N₂ und Argon enthält, vor dem Freisetzen der resultierenden Gasmischung in den Fahrgastraum (5) in situ bereitgestellt wird.

5. Vorrichtung zum automatischen Erfassen einer Brandgefahr sowie zum Löschen eines Brandes in selbstfahrenden Fahrzeugen, insbesondere mit Verbrennungsmotoren, enthaltend:
eine oder mehrere Aufprallerfassungseinrichtungen (6) ;
eine Vielzahl von unabhängig betätigbaren Düsen (3), die über verschiedene Teile (1, 4, 5) des Fahrzeugs verteilt sind und so ausgelegt sind, daß sie ein Kühl-/Feuerlöschmittel ausstoßen; und
eine Verarbeitungs-/Steuereinrichtung (8, 9) zum Aktivieren der Düsen (3) nach einem vorprogrammierten Schema,
**dadurch gekennzeichnet, daß**
das Feuerlöschmittel CO₂ enthält, das bereits in dem Fahrzeug vorgesehen ist und als Kühlmittel in dem Klimatisierungssystem (10, 11, 13, 14) des Fahrzeugs angewendet wird.

6. Vorrichtung nach Anspruch 5, **dadurch gekennzeichnet, daß** der bzw. die Aufprallerfassungseinrichtung(en) (6) und die Verarbeitungs-/Steuerungseinheit (8) Teile des Aufprallerfassungs- und Aktivierungssystems für die Auslösung des bzw. der Airbag(s) (7) sind.

7. Vorrichtung nach Anspruch 5 oder 6, **gekennzeichnet durch** einen Löschmittelbehälter (2), der CO₂ enthält, und einen zusätzlichen Behälter, der eine Mischung aus Stickstoff- und Argongas enthält und mit dem Löschmittelbehälter (2) verbunden ist, wodurch sichergestellt ist, daß INERGEN^{R} Gas, das zum Löschen eines Brandes im Fahrgastraum (5) anwendbar ist, in situ zur Verfügung steht.

## Revendications (Revendications pour l'(les) Etat(s) contractant(s) suivant(s): AT, BE, CH, LI, DK, ES, GR, IE, IT, LU, MC, NL, PT, SE)

1. Procédé de détection automatique d'un danger d'incendie et procédé de prévention ou d'extinction d'un incendie dans des véhicules automobiles, en particulier des véhicules équipés d'un moteur à combustion, le procédé comprenant les étapes de détection automatique d'un impact subi par un véhicule impliqué dans une collision au moyen d'un ou plusieurs détecteurs d'impact (6) et d'aspersion d'un agent d'extinction par des gicleurs (3), dans lequel une pluralité de gicleurs activables individuellement (3', 3", 3"') sont répartis dans différentes parties du véhicule pour expulser un agent de refroidissement ou d'extinction d'incendie selon une séquence préprogrammée,
**caractérisé en ce que**
l'agent d'extinction comprend du CO₂ déjà intégré dans le véhicule et utilisé comme réfrigérant dans le circuit de climatisation du véhicule (10, 11, 13, 14).

2. Procédé selon la revendication 1, **caractérisé en ce que** l'activation d'un gicleur de refroidissement ou d'extinction d'incendie (3"') situé dans le compartiment moteur du véhicule (4) est lancée en même temps que l'activation du ou des coussins gonflables (7) protégeant les occupants du véhicule.

3. Procédé selon la revendication 1 ou 2, **caractérisé en ce qu'**une activation des gicleurs d'extinction d'incendie (3") situés dans le compartiment des passagers (5) est retardée pendant une durée prédéterminée par rapport à la détection d'impact, de façon à permettre aux passagers de quitter le véhicule.

4. Procédé selon les revendications 1 à 3, **caractérisé en ce que** l'agent d'extinction d'incendie est du type INERGEN® formé in situ par adjonction de CO₂ provenant du circuit de climatisation du véhicule (10, 11, 13, 14) dans un récipient contenant un mélange de N₂ et d'argon avant la libération du mélange gazeux résultant dans le compartiment des passagers (5).

5. Appareil pour la détection automatique d'un danger d'incendie et l'élimination d'un incendie dans des véhicules automobiles, en particulier des véhicules équipés d'un moteur à combustion, comprenant :
un ou plusieurs détecteurs d'impacts (6) ;
une pluralité de gicleurs activables individuellement (3) répartis dans différentes parties (1, 4, 5) du véhicule et adaptés pour expulser un agent de refroidissement ou d'extinction d'incendie ; et
des moyens de traitement/commande (8, 9) pour activer lesdits gicleurs (3) selon une séquence préprogrammée,
**caractérisé en ce que**
l'agent d'extinction comprend du CO₂ déjà intégré dans le véhicule et utilisé comme réfrigérant dans le circuit de climatisation du véhicule (10, 11, 13, 14).

6. Appareil selon la revendication 5, **caractérisé en ce que** le ou les détecteurs d'impact (6) et l'unité de traitement/commande (8) font partie du système de détection d'impact et d'activation commandant la libération du ou des coussins gonflables (7).

7. Appareil selon la revendication 5 ou 6, **caractérisé en ce qu'**il comprend un récipient d'agent d'extinction (2) contenant du CO₂ et un récipient supplémentaire contenant un mélange d'azote et d'argon et relié au récipient d'agent d'extinction (2), ce qui assure la formation in situ de gaz INERGEN® utilisable pour éteindre un incendie dans le compartiment des passagers (5).

## Revendications (Revendications pour l'(les) Etat(s) contractant(s) suivant(s): DE, FR, GB)

1. Procédé de détection automatique d'un danger d'incendie et procédé de prévention ou d'extinction d'un incendie dans des véhicules automobiles, en particulier des véhicules équipés d'un moteur à combustion, le procédé comprenant les étapes de détection automatique d'un impact subi par un véhicule impliqué dans une collision au moyen d'un ou plusieurs détecteurs d'impact (6) et d'aspersion d'un agent d'extinction par des gicleurs (3), dans lequel :
une pluralité de gicleurs activables individuellement (3', 3", 3"') sont répartis dans différentes parties (1, 4, 5) du véhicule pour expulser un agent de refroidissement ou d'extinction d'incendie selon une séquence préprogrammée, et dans lequel
une activation des gicleurs d'extinction d'incendie (3") situés dans le compartiment des passagers (5) est retardée pendant une durée prédéterminée par rapport à une détection d'impact, de façon à permettre aux passagers de quitter le véhicule.

2. Procédé selon la revendication 1, **caractérisé en ce que** l'activation d'un gicleur de refroidissement ou d'extinction d'incendie (3"') situé dans le compartiment moteur du véhicule (4) est lancée en même temps que l'activation du ou des coussins gonflables (7) protégeant les occupants du véhicule.

3. Procédé selon la revendication 1 ou 2, **caractérisé en ce que** l'agent d'extinction comprend du CO₂.

4. Procédé selon la revendication 1, 2 ou 3, **caractérisé en ce que** l'agent d'extinction comprend du CO₂ déjà intégré dans le véhicule et utilisé comme réfrigérant dans le circuit de climatisation du véhicule (10, 11, 13, 14).

5. Procédé selon la revendication 3 ou 4, **caractérisé en ce que** l'agent d'extinction d'incendie est du type INERGEN® formé in situ par adjonction de CO₂ provenant du circuit de climatisation du véhicule (10, 11, 13, 14) dans un récipient contenant un mélange de N₂ et d'argon avant la libération du mélange gazeux résultant dans le compartiment des passagers (5).

6. Appareil pour la détection automatique d'un danger d'incendie et l'élimination d'un incendie dans des véhicules automobiles, en particulier des véhicules équipés d'un moteur à combustion, comprenant :
un ou plusieurs détecteurs d'impacts (6) ;
une pluralité de gicleurs activables individuellement (3) répartis dans différentes parties (1, 4, 5) du véhicule et adaptés pour expulser un agent de refroidissement ou d'extinction d'incendie ; et
des moyens de traitement/commande (8, 9) pour activer lesdits gicleurs (3) selon une séquence préprogrammée,
dans lequel
la séquence prévoit qu'une activation des gicleurs (3") situés dans le compartiment des passagers (5) est retardée pendant une durée prédéterminée par rapport à une détection d'impact, de façon à permettre aux passagers de quitter le véhicule.

7. Appareil selon la revendication 6, **caractérisé en ce que** le ou les détecteurs d'impact (6) et l'unité de traitement/commande (8) font partie du système de détection d'impact et d'activation commandant la libération du ou des coussins gonflables (7).

8. Appareil selon la revendication 7, **caractérisé en ce que** l'agent d'extinction est un réfrigérant utilisé dans le circuit de climatisation du véhicule (10, 11, 13, 14).

9. Appareil selon l'une quelconque des revendications 6 à 8, **caractérisé en ce que** l'agent d'extinction est du CO₂.

10. Appareil selon l'une quelconque des revendications 6 à 9, **caractérisé en ce qu'**il comprend un récipient d'agent d'extinction (2) contenant du CO₂ et un récipient supplémentaire contenant un mélange d'azote et d'argon et relié au récipient d'agent d'extinction (2), ce qui assure la formation in situ de gaz INERGEN® utilisable pour éteindre un incendie dans le compartiment des passagers (5).
